# EUROPEAN PATENT APPLICATION

(11) **EP 2 899 365 A1**
(43) Date of publication of application: **29.07.2015**
(21) Application number: 13839910.0
(22) Date of filing: 18.09.2013
(51) Int. Cl.: E21B 43/26

(54) **METHOD FOR FRACTURE COMMUNICATION, PASSAGE PROCESSING, AND UNDERGROUND GASIFICATION OF UNDERGROUND CARBON-CONTAINING ORGANIC MINERAL RESERVOIR**

(30) Priority: 21.09.2012 CN 201210354916
(71) Applicant: Enn Coal Gasification Mining Co. Ltd., LangFang, Hebei 065001 (CN)
(72) Inventor: CHEN, Feng, LangFang Hebei 065001 (CN); ZHANG, Shuchuan, LangFang Hebei 065001 (CN); LIU, Gang, LangFang Hebei 065001 (CN); PANG, Xulin, LangFang Hebei 065001 (CN)
(74) Representative: Meissner, Bolte & Partner GbR
(86) International application number: PCT/CN2013/083813
(87) International publication number: WO 2014/044200

(57) **Abstract**

Provided is a method for fracture communication, passage processing and underground gasification of an underground carbon-containing organic mineral reservoir, where a mixture of CO₂ and O₂ is used as a medium for a fracture communication step, a passage processing step and/or a gasification step. The method uses the mixture of CO₂ and O₂ to extract and utilize the energy in the underground carbon-containing organic mineral reservoir, greatly increases energy utilization efficiency compared with conventional utilization schemes, and, compared with conventional underground gasification technologies, increases the calorific value of a combustible gas, increases and adjusts effective gas compositions, suppresses CO₂ generation and reduces raw material gas production costs, while at the same time implements the capturing of CO₂ and utilization of the same as a resource.

## Description

### Field of the Invention

The present invention relates to a novel underground gasification process. In particularly, the present invention relates to a process for fracture communication, passage processing and underground gasification of a carbon-containing organic mineral reservoir, particularly a coal seam, an oil shale layer or the like.

### Background of the Invention

The Underground Coal Gasification technology is an in-situ coal gasification technology to directly convert the underground coal seam into coal gas. A gasification agent (e.g., air, oxygen, water vapor, etc.) is injected into the underground coal seam through a ground borehole during the underground gasification, so that a gasification reaction (C+CO₂→2CO, C+H₂O→CO+H₂, etc. as main reactions) directly occurs between the coal seam and the gasification agent to generate coal gas (CO, H₂, CH₄, CO₂, etc., as main components). The coal gas generated from this reaction is captured onto the ground through a borehole to serve as industrial fuel for power generation, heat supply and the like by direction combustion or serve as chemical raw material for the synthesis of methanol, methane, chemical fertilizer and the like. Compared with the ground coal gasification technology, in which well building, coal mining, washing, coal preparation, gasification, slag removal or other preliminary and subsequent process steps are required, the underground gasification technology integrates the three main processes of well building, coal mining and gasification processes, thus both numerous and jumbled ground and underground equipments and tedious intermediate steps are omitted, so that the capital investment may be reduced by 20-40%. Meanwhile, the emission of pollutants and wastes during those processes may be lowered and the excessive dependence on water resource is reduced, therefore, in comparison to the conventional coal mining and utilization pattern, the underground gasification technology is an efficient and clean energy technology integrating green coal mining with clean conversion.

Producing air gas by the underground gasification technology substantially realizes the stability of the calorific value and yield of gas, and realizes commercial applications, for example, five underground gasification stations were put into operation in the peak period of the former Soviet Union, with the gas yield reaching 2.5 billion Nm³/yr; and the produced gas is mainly supplied to thermal power plants for power generation, with the calorific value of the gas being 850-950 kcal/Nm³. The production of air gas has a relatively simple control process; however, for this underground gasification technology, the calorific value (600-1100 kcal/Nm³) of coal gas is low and the content of effective components (H₂+CH₄+CO) is only about 18-32%, where the majority of the effective components is H₂ (14-24%), while if the coal gas is used as a raw material gas for chemical synthesis, the content of CO is low. To increase the calorific value of the air gas, adjust the content of effective components and change the coal gas utilization ways, usually, the research and development and utilization of underground coal gasification technology are carried out by continuously feeding gasification agents with fixed components (e.g., oxygen-rich gasification) or feeding gasification agents with different components in stages (e.g., two-stage process). However, the majorities of these gasification agents are air or oxygen-rich air and additional water vapor, so there are the following main problems:
(1) due to a still high content of N₂ (40-60%) in the coal gas, the power consumption of compression and conveyance in subsequent stages is increased, and it is required to set up a denitrification stage in the synthesis stage having a strict requirement for the content of N₂; however, it is difficult to remove N₂ from the coal gas, and it is not cost effective to remove N₂ from the coal gas from the perspective of equipment investment and costs of manipulation, maintenance and operation;
(2) to control the content of N₂ in the coal gas, the gasification agent used in some technologies is pure oxygen added with water vapor; however, as the water vapor will exchange heat with the wall of a borehole during the conveyance, a part of the water vapor is condensed into water and the temperature regulating effect of the water vapor is thus weakened, as a result, the partial temperature of a gasifier becomes too high and ash is melted thus it will hinder the gasification reaction; meanwhile, as it is required to consume a large amount of heat during the generation of water vapor, the utilization efficiency of energy will be reduced;
(3) as the underground coal seam generally contains water, the output gas contains a certain amount of water vapor, and the addition of water vapor as a gasification agent will increase both the load of effective output gas and the amount of ground sewage to be treated; meanwhile, due to a long residence time of the gas in the underground gasifier, the Water-Gas Shift Reaction (CO+H₂O→CO₂+H₂) will be aggravated, so that the content of CO in the output gas is reduced; and
(4) as an intermediate and a resulting product of the gasification process, CO₂, participating in a series of redox reactions, is an important component (the content of CO₂ is about 15-60%) of the output gas and an important factor in increasing the calorific value and effective components of the coal gas; however, the recycling of CO₂ is not taken into consideration in the present technologies.

In recent years, the development of unconventional oil and gas recourses (for example, oil shale, thickened oil and other resources) has been scheduled. Some large international petroleum companies have been working on the research and development of underground in-situ transformation technologies and have obtained certain technical achievements. In China, some scientific research institutions and enterprises actively explore and innovate the in-situ transformation technologies on the basis of the present resource situation, where, using the underground gasification technology to extract oil shale and thickened oil resources has been proved by experiments, but the commercial utilization value still needs to be deeply explored and researched. Coal, oil shale and thickened oil are all carbon-containing organic mineral reservoirs, and the problems as described in the underground coal gasification process and the technical solutions to solve the problems are also applicable to and significance for the gasification of other carbon-containing organic mineral reservoirs. From the perspective of resource development and utilization, if the in-situ transformation to combustible gases or the preparation of natural gas may be realized by the underground gasification technology, this underground gasification technology undoubtedly provides for important economic and environmental benefits for the development and utilization of unconventional oil and gas resources, the adjustment of the energy structure and the promotion of energy conversation and emission reduction.

### Summary of the Invention

In view of the problems in the prior art and the special role of CO₂ in the underground gasification process, an objective of the present invention is to provide a novel method for fracture communication, passage processing and underground gasification of an underground carbon-containing organic mineral reservoir, where a mixture of CO₂ and O₂ (sometimes expressed as "CO₂/O₂ or CO₂ oxygen-rich medium" herein) is used as a medium for underground gasification of the underground carbon-containing organic mineral reservoir.

Hence, in one aspect, the present invention provides an application of a mixture of CO₂ and O₂ as a medium for fracture communication or passage processing of an underground carbon-containing organic mineral reservoir.

In another aspect, the present invention provides a method for fracture communication of an underground carbon-containing organic mineral reservoir, wherein the carbon-containing organic mineral reservoir is provided with at least one injection borehole and at least one production borehole, which allow the carbon-containing organic mineral reservoir to communicate with the ground, respectively, characterized in that, the method comprises: injecting a mixture of CO₂ and O₂ as a fracturing medium through the injection borehole to form a communicating fracture in the carbon-containing organic mineral reservoir between the injection borehole and the production borehole.

In still another aspect, the present invention provides a method for gasification passage processing of an underground carbon-containing organic mineral reservoir, wherein the carbon-containing organic mineral reservoir is provided with at least one injection borehole and at least one production borehole, which allow the carbon-containing organic mineral reservoir to communicate with the ground, respectively, and a communicating fracture has been formed in the carbon-containing organic mineral reservoir between the injection borehole and the production borehole, characterized in that, the method comprises: processing the communicating fracture by using a mixture of CO₂ and O₂ as a passage processing medium, and expanding the communicating fracture by pressurization and/or combustion to form a gasification passage.

In still another aspect, the present invention provides a method for underground gasification of an underground carbon-containing organic mineral reservoir, wherein the carbon-containing organic mineral reservoir is provided with at least one injection borehole and at least one production borehole, which allow the carbon-containing organic mineral reservoir to communicate with the ground, respectively, characterized in that, the method for underground gasification comprises: a fracture communication step of performing fracture communication to the carbon-containing organic mineral reservoir to form a communicating fracture; a passage processing step of performing passage processing to the communicating fracture to form a gasification passage; and a gasification step of gasifying the underground carbon-containing organic mineral reservoir to generate a raw gas, where a mixture of CO₂ and O₂ is used as a medium, i.e., a fracturing medium (fracture communication medium), a passage processing medium and a gasification medium, respectively, in at least one step in the group of the fracture communication step, the passage processing step and the gasification step.

In a preferred embodiment, the injection borehole and the production borehole are directional boreholes or vertical boreholes.

In a preferred embodiment, after the fracture communication step, the carbon-containing organic mineral reservoir is ignited to establish a fire zone, and the passage processing step and the gasification step are then performed.

In a preferred embodiment, before the fracture communication step, a fire zone has been established in the carbon-containing organic mineral reservoir, and the fracture communication step, the passage processing step and the gasification step are performed by using the existed fire zone of the carbon-containing organic mineral reservoir.

In a preferred embodiment, in the fracture communication step, by injecting a mixture of CO₂ and O₂ as a fracturing medium from the injection borehole, the communicating fracture is formed in the carbon-containing organic mineral reservoir between the injection borehole and the production borehole.

In a preferred embodiment, in the passage processing step, by using a mixture of CO₂ and O₂ as a passage processing medium, the communicating fracture is expanded by pressurization and/or combustion to form the gasification passage.

In a preferred embodiment, in the gasification step, a combustion reaction is performed while increasing the inflow of a mixture of CO₂ and O₂ as a gasification medium in the gasification passage, so that the carbon-containing organic mineral reservoir is gasified to generate the raw gas.

In a preferred embodiment, the carbon-containing organic mineral reservoir is a coal seam or an oil shale layer.

In a preferred embodiment, in the fracture communication step, the carbon-containing organic mineral reservoir between the injection borehole and the production borehole is fractured by mechanical drilling, and then the medium is injected to form the communicating fracture.

In a preferred embodiment, the mechanical drilling is at least one drilling in the group of directionally horizontal drilling, ultrashort-radius horizontal drilling and pinnate horizontal drilling.

In a preferred embodiment, during the fracture communication, pressure changes in the injection borehole and in the production borehole are monitored; and, when the pressure in the injection borehole drops sharply while the gas outflow of the production borehole is above 100 Nm³/h, it indicates that the communicating fracture has been formed.

In a preferred embodiment, the volume concentration of O₂ in the medium for the fracture communication and/or the passage processing is 20-50%.

In a preferred embodiment, the volume concentration of O₂ in the medium for the fracture communication and/or the passage processing is 20-35%.

In a preferred embodiment, the volume concentration of O₂ in the medium for the gasification step is 50-70%.

In a preferred embodiment, the volume concentration of O₂ in the medium for the gasification step is 50-65%.

In a preferred embodiment, the method further comprises: a CO₂ recycling step: separating and recycling CO₂ from the raw gas generated in the gasification step, wherein at least one part of the recycled CO₂ is pressurized and then injected into the carbon-containing organic mineral reservoir for the fracture communication, the passage processing and/or the gasification.

In a preferred embodiment, the method further comprises: a CO₂ storage step: injecting the recycled CO₂ into the combustion cavity generated after gasifying the carbon-containing organic mineral reservoir for storage.

In a preferred embodiment, the CO₂ in the medium is gaseous, liquid or supercritical CO₂.

In a preferred embodiment, the CO₂ in the medium is a mixed liquid composed of liquid CO₂, collagen liquid and chemical additives.

In a preferred embodiment, solid-phase particles are added into the medium to support the formed communicating fracture.

In a preferred embodiment, the mixture of CO₂ and O₂ is obtained by mixing CO₂ with pure oxygen on the ground or in the injection borehole.

In a preferred embodiment, a fire zone is established at the bottom of the injection borehole or the production borehole, and the mixture of CO₂ and O₂ is conveyed from the ground to the fire zone through an annular conveying pipe or the injection borehole.

In a preferred embodiment, a high pressure pipeline for conveying the mixture of CO₂ and O₂ or for feeding high pressure CO₂ during the CO₂ storage step at the end of gasification and a low pressure pipeline for conveying the low pressure mixture of CO₂ and O₂ are mounted at the inlet of the injection borehole, and a high pressure coal gas pipeline for conveying a gas mixture generated during the fracture communication and a low pressure coal gas pipeline for conveying the low pressure raw gas generated by the gasification are mounted at the outlet of the production borehole.

In a preferred embodiment, CO₂ in the generated raw gas is separated and captured, and the captured CO₂ is used for the fracture communication, the passage processing or the underground gasification.

In a preferred embodiment, the medium further includes water vapor.

In the present invention, a mixture of CO₂ and O₂ is used as a medium for fracture communication, passage processing and/or underground gasification of a carbon-containing organic mineral reservoir, that is, the mixture of CO₂ and O₂ is used as a fracturing medium, a gasification passage processing medium and a gasification medium, respectively; in addition, CO₂ may be used as an important cooling medium during the subsequent treatment of a combustion cavity formed after gasifying the carbon-containing organic mineral reservoir. The method provided by the present invention is an integrated technology. By integrating the above technologies, the calorific value of a combustible gas may be increased, the ratio of CO to H₂ in a raw gas is adjusted, the generation of CO₂ is suppressed, the production cost of the raw gas is reduced, and meanwhile the CO₂ capture and resource utilization are realized.

### Brief Description of the Drawings

Fig. 1 is a process diagram of an underground gasification method according to an embodiment of the present invention, where (a) denotes a fracture communication process, (b) denotes a passage processing process, (c) denotes a gasification process, and (d) denotes CO₂ storage;
Fig. 2 is a schematic diagram of a fracture communication process of the underground gasification method according to another embodiment of the present invention, where fracturing is performed by ultrashort-radius horizontal drilling to form a communicating fracture;
Fig. 3 is a schematic diagram of a fracture communication process of the underground gasification method according to another embodiment of the present invention, where the direct butting with a fire zone is performed by directionally horizontal drilling; and
Fig. 4 is a schematic diagram of a fracture communication process of the underground gasification method according to another embodiment of the present invention, where oil shale is extracted by pinnate horizontal drilling;
in which:
- 1:: Carbon-containing organic mineral reservoir
- 2:: Ground
- 3:: Overlying strata
- 4:: Communicating fracture generated by direct fracture communication
- 5:: Injection borehole
- 6:: Production borehole
- 7:: High pressure pipeline for CO₂ and O₂
- 8:: High pressure coal gas pipeline
- 9:: Ignition zone
- 10:: Gasification passage
- 11:: Low pressure pipeline for CO₂ and O₂
- 12:: Low pressure coal gas pipeline
- 13:: Combustion cavity
- 14:: Communicating fracture formed by horizontal drilling
- 15:: Ultrashort-radius horizontal drilling equipment
- 16:: Fire zone
- 17:: Communicating fracture formed by directional drilling
- 18:: Pinnate multilateral well

### Detailed Description of the Preferred Embodiments

In view of the problems in the prior art and the special role of CO₂ in the underground gasification process, the present invention provides a novel underground gasification technology for a carbon-containing organic mineral reservoir. With this technology, a mixture of CO₂ and O₂ is used as a medium for underground gasification, and the mixture of CO₂ and O₂ is used as a fracturing medium, a processing medium for gasification passage processing and a gasification medium for generation of a raw gas, respectively; and, CO₂ is used as a cooling medium during the subsequent treatment of a combustion cavity. The method provided by the present invention uses the mixture of CO₂ and CO₂ to extract and utilize the energy in the underground carbon-containing organic mineral reservoir, greatly increases energy utilization efficiency compared with the conventional utilization schemes (e.g., underground mining, etc.), and, compared with the conventional underground gasification technologies, increases the calorific value of a combustible gas, increases and adjusts effective gas compositions, suppresses the generation of CO₂ and reduces the production cost of raw material gas, and meanwhile realizes the CO₂ capture and resource utilization.

For this purpose, the specific method of the present invention at least includes one or combinations of the following steps:
(1) in a carbon-containing organic mineral reservoir to be gasified, such as a coal seam or an oil shale layer, having boreholes communicated to the ground, two adjacent boreholes are selected and one acts as an injection borehole and the other one acts as a production borehole, where the injection borehole and the production borehole may be vertical boreholes and/or directional boreholes, and the carbon-containing organic mineral reservoir between the two boreholes are subjected to fracture communication and fracture expansion. A high pressure mixture of CO₂ and pure O₂ (the volume concentration of O₂ is 20%-35%) is injected from the injection borehole to perform fracture communication to the carbon-containing organic mineral reservoir, where the term "high pressure" refers that the pressure of the mixture as the fracturing medium is not lower than a fracturing pressure of the carbon-containing organic mineral reservoir. The mixture of CO₂ and O₂ moves along the pores and fractures in the carbon-containing organic mineral reservoir and is then discharged from the production borehole, so that a communicating fracture is established in the carbon-containing organic mineral reservoir between the injection borehole and the production borehole.

If no fire zone is established in a carbon-containing organic mineral reservoir (e.g., a coal seam) when the technology of the present invention is implemented, an ignition step is required. Specifically, after finishing the treatment of sludge at the injection borehole or the production borehole, an electric heater is placed, and the pressures at both the injection borehole and the production borehole are controlled to be higher than the hydrostatic pressure of the coal seam, and then the electric heater is turned on to heat the coal seam. After the temperature exceeds the ignition point of the coal seam, this temperature is maintained for a certain period of time (about one day), then the mixture of O₂ and CO₂ (the volume concentration of O₂ is in a range of 20%-50%) is fed from an ignition hole. While keeping the pressures at both the inlet and the outlet being higher than the hydrostatic pressure, another borehole is slowly opened, and the components of output gas are observed. When the calorific value of coal gas in the output gas is larger than about 700 kcal/Nm³, the coal seam is ignited i.e. the ignition step is finished so far and then a passage processing step is started.

Another ignition method is as follows: after finishing the treatment of sludge at the injection borehole and the production borehole, the pressure at the injection borehole and the pressure at the production borehole are controlled to be higher than the hydrostatic pressure of the coal seam, then burning coke is quickly placed, and the mixture of O₂ and CO₂ (the volume concentration of O₂ is about 20%-50%) is fed from the ignition hole. While keeping the pressures at both the inlet and the outlet being higher than the hydrostatic pressure, another borehole is slowly opened, and the components of output gas are observed. When the calorific value of coal gas in the output gas is larger than about 700 kcal/Nm³, the coal seam is ignited and then a gasification passage processing step is started.

If a fire zone has been formed in a carbon-containing organic mineral reservoir (e.g., a coal seam) prior to the implementation of the present invention, the ignition step is not required. If a fire zone has been formed in an underground carbon-containing organic mineral reservoir (e.g., a coal seam) when the technology of the present invention is implemented, the fracture communication step, the passage processing step and the gasification step may be performed by using the existed fire zone in the carbon-containing organic mineral reservoir.
(2) The fracture formed in the carbon-containing organic mineral reservoir between the two boreholes is heated and then expanded to form a gasification passage. An oxygen-rich gas (sometimes referred to as a CO₂ oxygen-rich medium), having a volume concentration of oxygen of 20-50% and obtained by mixing CO₂ and pure oxygen, is injected from the injection borehole to an ignition zone (the ignition zone is established at for example the bottom of the production borehole) along the communicating fracture formed in the carbon-containing organic mineral reservoir between the boreholes. By controlling the flow (500 Nm³/h to 5000 Nm³/h) and concentration (the volume concentration of oxygen is 20%-50%) of the CO₂ oxygen-rich medium, the combustion source is allowed to move towards the injection borehole against an airflow direction of the CO₂ oxygen-rich medium, so that the fracture formed in the carbon-containing organic mineral reservoir between the boreholes is heated, and the fracture is thus expanded to form a gasification passage.
(3) The flow of the medium injection to the gasification passage is increased, and gasification is now performed. When the pressure of the CO₂ oxygen-rich medium at the injection borehole drops significantly (generally, a pressure drop reaches about 5% or more per day of an initial pressure), the flow of the CO₂ oxygen-rich medium is increased (up to 6000 Nm³/h to 10000 Nm³/h) or the concentration of oxygen in the CO₂ oxygen-rich medium is increased (the volume concentration of oxygen is increased to 50%-70%) to raise the temperature of the reaction zone, and the combustion source is allowed to move towards another borehole (generally the production borehole herein) in a direction opposite to the airflow direction of the CO₂ oxygen-rich medium, so that the contact reaction of the CO₂ oxygen-rich medium and the carbon-containing organic mineral reservoir is ensured, and the carbon-containing organic mineral reservoir between the boreholes is gasified to generate a raw gas (a mixture of hydrogen, methane, carbon monoxide, carbon dioxide and the like).

The above method may further include: step (4): CO₂ is pressurized and then injected into a combustion cavity formed after combusting and gasifying the carbon-containing organic mineral reservoir between the boreholes for storage. CO₂ in the raw gas produced in step (3) is separated, recycled, pressurized and then injected into the combustion cavity from one of the boreholes. As a part of space within the combustion cavity is filled with ash, coke slag, dirt band, roof rocks and non-gasified carbon-containing organic mineral reservoir, the competitive adsorption (that is, the adsorption capacity of CO₂ is higher than that of methane) of the injected CO₂ may swap out the combustible gas adsorbed by the ash, coke slag, dirt band, roof rocks and non-gasified carbon-containing organic mineral reservoir in the combustion cavity, and CO₂ is adsorbed by these substances, thereby realizing the CO₂ storage.

In this method, the used CO₂ may be obtained in various ways, mainly depending on the application and quality of the raw gas generated by the carbon-containing organic mineral reservoir during the underground gasification. If the raw gas is used for power generation, CO₂ in the exhaust fume generated during power generation may be recycled. If the raw gas is used for the synthesis of chemical products, CO₂ in the raw gas, as a cooperative raw material gas of the chemical products, may be recycled.

Further, the fracture expansion method in step (1) may be performed in combination with other drilling technologies. For example, fracturing (forming a communicating fracture) is performed by mechanical drilling (for example, horizontal directional drilling technology and ultrashort-radius horizontal drilling), and then the fracture is treated with the mixture of CO₂ and O₂.

Further, the CO₂ used for the fracture communication may be gaseous, liquid or supercritical CO₂, or, a mixed liquid composed of liquid CO₂, collagen liquid such as guanidine gum and various chemical additives such as potassium chloride. Alternatively, solid-phase particles such as quartz powder are added into the medium to support the fracture formed during the fracture communication.

Further, during the fracture communication, the change in pressure of the mixture of CO₂ and O₂ injected into the boreholes is monitored. When the pressure in the boreholes drops sharply (generally, a pressure drop reaches about 5% or more per day of an initial pressure), and the gas outflow of the production borehole is above 100 Nm³/h, it is indicated that a communicating fracture has been formed in the carbon-containing organic mineral reservoir between the two boreholes.

Further, the used CO₂ may be CO₂ separated by a decarbonization unit in the ground gas purification stage.

Further, the volume concentration of oxygen in step (2) is required to be 20-50%, preferably 20-35%. The volume concentration of oxygen may be adjusted according to the pressure of the injection borehole to ensure that the ash will not be melted and the passage will not be blocked.

Further, the volume concentration of oxygen in step (3) is required to be 50-70%, preferably 50-65%. The volume concentration of oxygen may be adjusted according to the combustible gas compositions in the raw gas from the production borehole to ensure a proper temperature of the gasification passage and to allow the compositions to meet the requirements of the subsequent chemical synthesis.

Further, for the mixing of CO₂ with pure O₂, the two gases may be mixed on the ground first, or, instead of being mixed on the ground, the two gases may be injected by a double-layer casing (an annular casing) and then mixed on the bottom of or in the borehole.

Further, for the conveying of the CO₂ oxygen-rich, the CO₂ oxygen-rich may be conveyed from the ground to the underground carbon-containing organic mineral reservoir by an annular conveying pipe, or directly conveyed from the ground to the underground carbon-containing organic mineral reservoir through a borehole casing.

In a preferred embodiment, a high pressure pipeline for conveying the mixture of CO₂ and O₂ or for feeding the high pressure CO₂ during the CO₂ storing step at the end of gasification (the high pressure refers to a pressure higher than the fracturing pressure of the coal seam, where the fracturing pressure depends on the mechanical strength of the coal seam) and a low pressure pipeline for conveying the mixture of CO₂ and O₂ (the low pressure refers to a pressure lower than the hydrostatic pressure of the coal seam) are mounted at the inlet of the injection borehole, and a high pressure coal gas pipeline for conveying a gas mixture generated during the fracture communication (the high pressure refers to a pressure slightly higher than the hydrostatic pressure of the coal seam but lower than the pressure of the injection borehole) and a low pressure coal gas pipeline for conveying the low pressure raw gas generated by the gasification (the low pressure generally refers to a pressure lower about 3-5kg (0.3-0.5MPa) than the pressure of the injection borehole) are mounted at the outlet of the production borehole.

In a preferred embodiment, CO₂ in the produced coal gas is separated and captured, and the captured CO₂ is used as the medium for the fracture communication, the passage processing or the underground gasification.

In a preferred embodiment, the medium for the passage processing and/or gasification step further includes water vapor. For a coal seam containing less water, the CO₂, O₂ and water vapor may also be used as the medium for gasification passage processing and gasification, and the addition amount of water should be determined according to a result obtained by dividing a difference between the water contained by the coal seam and the amount of water required for the gasification by a decomposition rate of the water vapor.

As the present invention uses the mixture of CO₂ and O₂ as a processing medium for the underground gasification process (fracture communication, passage processing and gasification), there is no N₂ fed during the whole process, so that there is nearly no N₂ in the output combustible gas after reaction, which is advantageous for the synthesis and utilization of subsequent chemical products such as methane. As the reaction of CO₂ with the carbon in the carbon-containing organic mineral reservoir is an endothermic reaction, ash is avoided from being overheated and melted in an oxidation layer due to high concentration of oxygen, so that the same role as water vapor in temperature regulation of the oxidation layer is played, and the disadvantages of difficult conveyance of water vapor in the underground gasification process, large energy consumption in the water vapor generation process and the like are overcome. It has been proved by experiments that CO₂ may quicken the generation rate of CO, suppress the Water-Gas Shift Reaction, and effectively adjust the content of combustible gas compositions in the raw gas generated by gasification; meanwhile, also as a carbon source, the participation of CO₂ in the gasification reaction reduces the consumption of carbon and increases the effective utilization of the carbon resource in the carbon-containing organic mineral reservoir transformed into CO or other combustible gas compositions. In addition, after CO₂ is recycled, a part of CO₂ is used as the raw material of a CO₂/O₂ medium, while the other part of CO₂ is stored in the combustion cavity formed after gasifying the carbon-containing organic mineral reservoir, so that the CO₂ capture and resource utilization may be simultaneously realized, the production cost of the raw material gas for synthesis of subsequent chemical products such as methane is reduced, the emission of CO₂ is reduced, and the energy consumption during this process is reduced.

In addition to the above advantages, the introduction of CO₂ may provide significantly synergistic effects for the three primary steps (fracture communication, passage processing and gasification), specifically:
(1) as the specific heat capacity of CO₂ is higher than that of N₂, by using a mixture of CO₂ and O₂ as a fracturing medium, CO₂ may play a cooling role on the surface of a carbon-containing organic mineral reservoir such as a coal seam; meanwhile, CO₂ has a fire suppression effect, so the spontaneous combustion of the coal seam during the fracture communication may be avoided;
(2) by using the mixture of CO₂ and O₂ as a fracturing medium, as CO₂ is adsorbed by the carbon-containing organic mineral reservoir during the fracture communication, it is advantageous for the CO₂ reduction reaction during the passage heating process, the passage may be prevented from being over-heated partially during the heating process so that the existence of a plurality of combustion sources in the processed passage or the case that the passage is partially melted because the temperature of a part of processing points is higher than the melting point of the carbon-containing organic mineral reservoir such as a coal seam is avoided, and the utilization of the carbon source in the carbon-containing organic mineral reservoir is improved;
(3) by using the mixture of CO₂ and O₂ as a medium for fracture communication and passage processing, as CO₂ is adsorbed in the carbon-containing organic mineral reservoir such as a coal seam, it is advantageous for temperature control in the subsequent gasification process, and the capacity of CO₂ competitively adsorbing methane increases the separation of a pyrolysis gas (particularly methane); and
(4) by using the mixture of CO₂ and O₂ as a medium for passage processing and gasification, the heat effect of the carbon-containing organic mineral reservoir such as a coal seam is enhanced, so that the problems of reduction or closure of fractures after the coal seam is fractured conventionally may be overcome; as a result, it is more advantageous for the gasification of the carbon-containing organic mineral reservoir, and it is thus advantageous for the increase of the mining coefficient of the carbon resource of the carbon-containing organic mineral reservoir, for example, the improvement of the recovery ratio of the coal seam.

The present invention will be further described as below in details with reference to the accompanying drawings by specific embodiments. However, it should be understood that the present invention is not limited to these embodiments.

### Embodiment 1

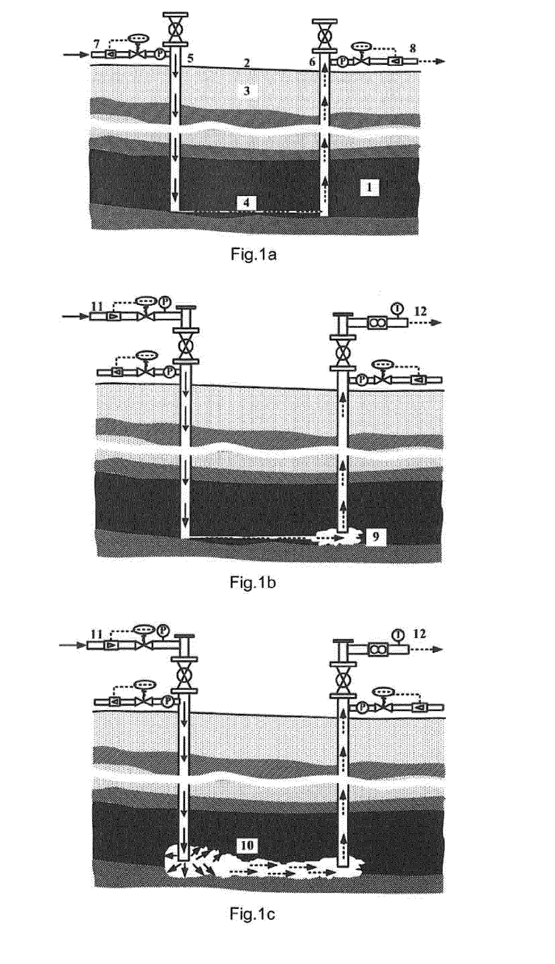

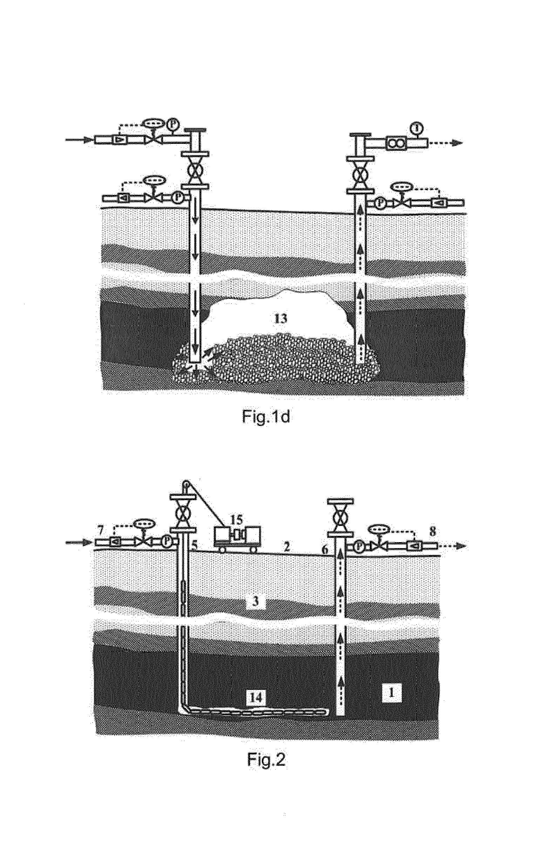

Fig. 1 is a process diagram of an underground gasification method according to an embodiment of the present invention, where (a) denotes a fracture communication process, (b) denotes a passage processing process, (c) denotes a gasification process, and (d) denotes CO₂ storage, wherein the method provided by the present invention is employed to gasify and mine a coal seam. In this embodiment, boreholes are arranged according to the scope of the coal seam to be gasified, and the number and arrangement of the boreholes depend on the characteristics of the coal seam, the production scale of raw material gas and the like. However, to implement the present invention, one injection borehole and one production borehole should be included or arranged at least, specifically as below:
Referring to Fig. 1(a), an injection borehole 5 is constructed in a coal seam (i.e., a carbon-containing organic mineral reservoir in the present invention) 1 from the ground 2 via an overlying strata 3. A production borehole 6 is constructed within a certain distance away from the injection borehole 5, for example, within 20 m to 500 m (it is to be noted that, as known to those skilled in the art, the distance may be specifically determined according to the way of the fracture communication formed for a coal seam; for example, if the fracture communication is performed by mechanical drilling, the distance may be slightly large, for example, 150 m to 500 m; if the fracture communication is performed by using the fracturing medium provided by the present invention only, the distance may be small, for example, 20 m to 50 m). Both the injection borehole 5 and the production borehole 6 are vertical boreholes here, with their bottoms being located in the coal seam to be gasified.

Referring to Fig. 1(a) and (b), a high pressure pipeline for CO₂ and O₂ 7 (the pressure of a processing medium is not lower than the fracturing pressure of the carbon-containing organic mineral reservoir) and a low pressure pipeline for CO₂ and O₂ 11 (the pressure of a medium is not higher than the hydrostatic pressure of the carbon-containing organic mineral reservoir) are mounted at the inlet of the injection borehole 5, and a high pressure coal gas (the pressure is about 0.7 MPa) pipeline 8 and a low pressure coal gas (the pressure of coal gas is about 0.5 MPa) pipeline 12 are mounted at the outlet of the production borehole 6, wherein the high pressure pipeline for CO₂ and O₂ 7 is used for conveying a high pressure mixture of CO₂ and O₂ (about 1.1 times of the fracturing pressure of the coal seam), and also used for conveying CO₂ at the end of gasification to a combustion cavity formed after gasifying the carbon-containing organic mineral reservoir 1 for storage; the low pressure pipeline for CO₂ and O₂ 11 is used for conveying low pressure CO₂ oxygen-rich (about 0.8 time of the hydrostatic pressure of the coal seam); the high pressure coal gas pipeline 8 is used for conveying a gas mixture generated during the fracture communication; and, the low pressure coal gas pipeline 12 is used for conveying low pressure raw gas generated by reactions.

In Fig. 1(a), the coal seam (i.e., the carbon-containing organic mineral reservoir) 1 is subjected to fracture communication first, and the valves of the low pressure pipeline for CO₂ and O₂ 11 and the low pressure coal gas pipeline 12 are closed during the fracture communication, the valve of the high pressure pipeline for CO₂ and O₂ 7 is opened and the valve of the high pressure coal gas pipeline 8 is opened, so that the mixture of CO₂ and O₂ is forced to move from the injection borehole 5 along the pores and fractures in the coal seam and then discharged from the high pressure coal gas pipeline 8 through the production borehole 6. After CO₂ and O₂ are injected, for example, the change in pressure at the inlet of the injection borehole 5 into which CO₂ and O₂ are injected and the change in flow at the production borehole 6 are closely monitored by a pressure meter respectively. When the pressure at the inlet of the injection borehole 5 drops sharply, that is, when the pressure drop monitored by the pressure meter is 5% or more per day of an initial pressure, and the gas outflow of the production borehole 6 is above 100 Nm³/h, it is indicated that a communicating fracture 4 has been directly formed by fracture communication in the coal seam between the above boreholes, so that the injection borehole 5 is brought to communicate with the production borehole 6 in the coal seam.

As shown in Fig. 1(b), at the end of the fracture communication, the gasification passage processing begins. At this moment, the injection borehole 5 is in communication with the production borehole 6 through the communicating fracture. To increase the flow of CO₂ and O₂ at the injection borehole 5 (generally, an increase of 100 Nm³/h each time), water in the coal seam between the two boreholes and the injected CO₂ and O₂ are all carried out via the high pressure coal gas pipeline 8 so that the coal seam at the bottom of the production borehole 6 remains dry, and then an electrical igniter is put down to an ignition zone 9 in the coal seam section at the bottom of the production borehole 6. On the ground, O₂ is mixed with CO₂ to form a CO₂ oxygen-rich medium having a volume concentration of O₂ of 20%, and the CO₂ oxygen-rich medium is then directly conveyed by the high pressure pipeline for CO₂ and O₂ 7, via the injection borehole 5, to the bottom of the production borehole 6 along the communicating fracture 4 generated by the fracture communication. Then, the igniter is started to ignite the coal seam at the bottom of the production borehole 6. After the coal seam is ignited, the raw gas generated by the reaction of the mixture of CO₂ and O₂ with the coal seam is discharged from the high pressure coal gas pipeline 8. After the ignition zone 9 is formed in the coal seam at the bottom of the production borehole 6, the temperature of the fire zone is controlled by adjusting the oxygen concentration and flow of the CO₂ oxygen-rich medium according to the water inflow of the coal seam and temperature of the output gas and the like. The temperature of the fire zone is generally not lower than the spontaneous combustion temperature (about 250-350□, specifically determined according to the spontaneous combustion temperature of the coal) of the coal seam.

After the fire zone is debugged to become stable, the flow (increased in steps, with an increase of 100 Nm³/h each time) and oxygen concentration (increased in steps, with an increase of 5% of the oxygen volume concentration each time) of the injection borehole 5 are adjusted according to the distance between the boreholes, the resistance of the boreholes, the pressure bearing capacity of the boreholes, the hydrostatic pressure of the coal seam, the structural strength of the coal seam roof and floor and other parameters, so that the CO₂ oxygen-rich medium is forced to be supplied to the ignition zone 9 along the injection borehole 5 at a required flow. Subsequently, the flow (about 3000 Nm³/h to 4000 Nm³/h) is maintained for reverse combustion (that is, the extension direction of the front edge of the flame is opposite to the flow direction of the supplied gas), and the pressure at the injection borehole 5 is monitored in real time. During the reverse combustion, O₂ in the CO₂ oxygen-rich medium reacts with the combustibles at the communicating fracture in the coal seam and a part of coal is thus consumed, so that the cross section of the communicating fracture is gradually expanded, which is advantageous for the discharge of the generated gas and the formation of percolation conditions beneficial to gasification reaction, heat transfer and mass transfer.

When the difference between the pressures displayed on pressure meters connected to the upper ends of the injection borehole 5 and the production borehole 6 is small (or the pressure difference is less than about 0.3 MPa), it is indicated that the communicating fracture between the bottom of the injection borehole 5 and the bottom of the production borehole 6 has been expanded to form a gasification passage 10 (referring to Fig. 1(c)), and the gasification passage processing step is finished.

After the construction of the gasification passage 10 is completed, the high pressure pipeline for CO₂ and O₂ 7 is stopped feeding gas, and the CO₂ oxygen-rich is fed from the low pressure pipeline for CO₂ and O₂ 11. Meanwhile, the high pressure coal gas pipeline 8 is stopped discharging gas, and the raw gas generated by the reaction is conveyed by the low pressure coal gas pipeline 12. Then, by increasing the flow (increased to about 6000 Nm³/h to 10000 Nm³/h) of the CO₂ oxygen-rich gas and/or increasing the volume concentration of oxygen (the oxygen concentration is adjusted to about 55%), the temperature of the reaction zone is increased, and forward gasification (that is, the extension direction of the front edge of the flame is the same as the flow direction of the supplied gas) is performed. The increase of the temperature of the forward gasification reaction may ensure that CO₂ comes into full contact with the surface of the red-hot coal seam in the gasification passage 10, quicken the rate of the gasification reaction and pyrolytic reaction of the CO₂ oxygen-rich with the coal seam, and improve the content of combustible gas and other effective compositions in the coal gas. During the forward gasification process, with the continuous broadening of the gasification passage 10, the rate of conveying oxygen to the surface of the burning coal seam will drop. At this moment, the flow and/or oxygen concentration of the CO₂ oxygen-rich gas may be adjusted (the adjustment range generally does not exceed 20% of the flow and oxygen volume concentration in a normal state) according to the gas compositions in the production borehole 10, the thickness of dirt band of the coal seam, the water content, the distance between the boreholes and the like. When the sum of the volume concentrations of effective compositions (mainly methane, CO, H₂) of the output gas has a drop of above 10% and the drop lasts for more than 48h, the gasification process of the coal seam between the boreholes is finished.

If water in the coal seam during the gasification is not sufficient for the gasification reaction of the coal seam (as one judgment method, according to the compositions of the output hydrogen, if the content of hydrogen in the coal gas during this process drops and the drop is 20% or more than the original concentration and cannot be recovered to the original level for a long period of time, it may be judged that water is insufficient), the amount of water to be added is obtained by dividing a difference between the amount of water required for gasification of the coal seam and the content of water contained in the coal seam by the decomposition rate of water vapor.

At the end of the gasification of the coal seam, the gasification passage 10 is expanded to form a combustion cavity 13 (as shown in Fig. 1 (d)), with a part of the combustion cavity being filled with ash, coke slag, dirt band, roof rock and non-gasified coal seam and being able to serve as a space for storing CO₂. At the end of gasification, the combustion cavity is still at a certain high temperature (an average temperature of 300-800□, accumulated heat after the previous combustion of the coal seam). First, CO₂ is fed into the combustion cavity via the high pressure pipeline for CO₂ and O₂ 11, where CO₂ exchanges heat with the ash, coke slag, dirt band, roof rock and the non-gasified coal seam in the combustion cavity so that the high-temperature combustion cavity is gradually cooled. Meanwhile, CO₂ performs competitive adsorption on the surface of the ash, coke slag, dirt band, roof rock and the non-gasified coal seam so as to swap out CH₄ and other combustible gas compositions adsorbed thereon. The generated mixture of CO₂ and the combustible gas containing CH₄ is discharged by the low pressure coal gas pipeline 12 from the ground through the production borehole 6, so that the heat and the combustible gas are recycled on the ground. After the temperature of the combustion cavity drops to 100-200□, the production borehole 6 is closed, the valve of the high pressure pipeline for CO₂ and O₂ 7 is opened, and CO₂ is injected. The pressure of CO₂ is generally controlled to be equivalent to the hydrostatic pressure of the coal seam, and the injection amount of CO₂ is generally controlled at 400-500 Nm³/m³ (400-500 m³ of CO₂ may be stored in each unit volume of the combustion cavity), specifically determined according to the volume of the combustion cavity and the hydrogeological conditions of the coal seam and the like. Thus, the CO₂ storage in the combustion cavity is accomplished.

### Embodiment 2

The method employed by Embodiment 2 is basically the same as Embodiment 1, except for a difference that the fracture communication step in Embodiment 2 employs ultrashort-radius horizontal drilling. Fig. 2 is a schematic diagram of a fracture communication process of the underground gasification method according to Embodiment 2 of the present invention, where the fracturing is performed by ultrashort-radius horizontal drilling to form a communicating fracture. As shown in Fig. 2, an injection borehole 5 is constructed from the ground 2 to a coal seam (i.e., a carbon-containing organic mineral reservoir) 1 via an overlying strata 3, and a production borehole 6 is constructed within a certain distance (about 40 m to 100 m, a maximum length which can be constructed by those skilled in the art by ultrashort horizontal drilling) away from the injection borehole 5. Both the injection borehole 5 and the production borehole 6 are vertical boreholes here, with their bottoms being in the coal seam to be gasified. By the ultrashort-radius horizontal drilling equipment 15, a passage for allowing an ultrashort horizontal drill to come in or go out is directly formed on the inner wall of the vertical borehole, for a purpose of performing laterally horizontal drilling from the injection borehole along a horizontal connection pipeline of the injection borehole 5 and the production borehole 6, so that a horizontally-drilled communicating fracture 14 is formed in the coal seam so as to allow the injection borehole 5 and the production borehole 6 to communicate to each other.

At the end of the ultrashort-radius horizontal drilling, the drill is removed, and a gasification passage processing begins. The valve of the high pressure pipeline for CO₂ and O₂ 7 is opened, and the valve of the high pressure coal gas pipeline 8 is opened. By controlling the flow (about 500 Nm³/h to 1000 Nm³/h) of CO₂ and O₂ at the injection borehole 5, mositure accumulated in the horizontally-drilled communicating fracture 14 in the coal seam between the two boreholes and the injected CO₂ and O₂ are all carried out via the high pressure coal gas pipeline 8 so that the coal seam on the bottom of the production borehole 6 remains dry, and an electrical igniter is put down to the coal section at the bottom of the production borehole 6. On the ground, O₂ is mixed with CO₂ to obtain a CO₂/O₂ mixture having a volume concentration of O₂ of 30%, and then the CO₂/O₂ is fed by the high pressure pipeline for CO₂ and O₂ 7, via the injection borehole 5, to the bottom of the production borehole 6 along the horizontally-drilled communicating fracture 14. Then, the igniter is started to ignite the coal seam at the bottom of the production borehole 6. After the coal seam is ignited, a raw gas generated by the reaction of the mixture of CO₂ and O₂ with the coal seam is discharged from the high pressure coal gas pipeline 8. After a preliminary ignition zone is formed in the coal seam at the bottom of the production borehole 6, the temperature of the fire zone is controlled by adjusting the oxygen concentration and flow of the gasification agent according to the water inflow of the coal seam, the temperature of the output gas and the like. The temperature of the fire zone is generally not lower than the spontaneous combustion temperature (about 250-350□, specifically depending on the spontaneous combustion temperature of the coal) of the coal seam.

After the fire zone is debugged to become stable, the gasification passage processing step and the gasification step begin, and the specific processes are similar to Embodiment 1.

### Embodiment 3

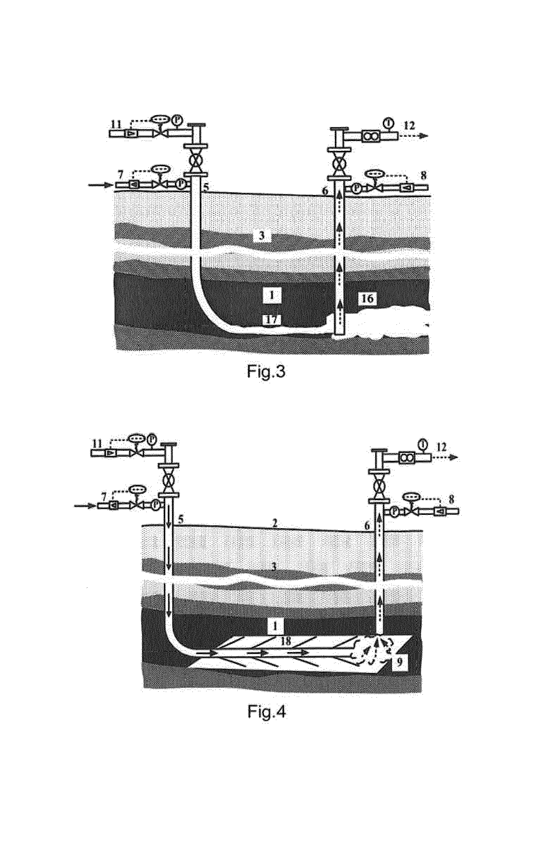

The method employed by Embodiment 3 is basically the same as Embodiment 1, except for a difference that a fire zone has been formed in a carbon-containing organic mineral reservoir prior to the fracture communication step in Embodiment 3 and the direct butting with the existing fire zone is performed by directionally horizontal drilling in the fracture communication stage. Fig. 3 is a schematic diagram of a fracture communication process of the underground gasification method according to Embodiment 3 of the present invention, where the direct butting with a fire zone is performed by directionally horizontal drilling. As shown in Fig. 3, a fire zone 16 has been formed at the bottom of the existing production borehole 6. It is to use the method provided by the present invention to gasify a new coal seam, in order to generate a synthesis gas.

By directionally drilling, within a certain distance away from the production borehole 6, an injection borehole 5 is constructed from the ground 2 to the coal seam (i.e., the carbon-containing organic mineral reservoir) 1 via an overlying strata 3, and a directionally-drilled communicating fracture 17 is formed in the coal seam to directly communicate with the existing fire zone 16. At the end of the directional drilling, the valve of the high pressure pipeline for CO₂ and O₂ 7 is opened, the valve of the high pressure coal gas pipeline 8 is opened, and the CO₂ oxygen-rich gas is fed for thermally processing the directionally-drilled communicating fracture 17.

By adjusting the pressure of the CO₂ and O₂ pipeline 7, the CO₂ oxygen-rich gas is forced to enter the coal seam along the injection borehole 5 at a required constant flow (about 800-1500 Nm³/h), with the volume concentration of oxygen in the CO₂ oxygen-rich gas being 40%. The constant flow is maintained, and the pressure of the injection borehole 5 is monitored in real time.

The pressure is monitored by a pressure meter connected at the injection borehole 5. When the monitored pressure at the injection borehole 5 drops significantly (for example, the pressure drop reaches about 5% per day of an initial pressure), the flow of the CO₂ oxygen-rich gas is increased and/or the volume concentration of oxygen is increased (the flow is increased to 3000-5000 Nm³/h, and the volume concentration oxygen is increased to 25-40%). The concentration of oxygen or the flow is specifically adjusted according to the thickness of dirt band of the coal seam, the water content, the distance between boreholes and the like. When the difference between the pressures displayed on pressure meters connected to the upper ends of the injection borehole 5 and the production borehole 6 is small (for example, the pressure difference is less than 0.3 MPa), it is indicated that the construction of a gasification passage between the injection borehole 5 and the production borehole 6 is finished.

After the construction of the gasification passage is completed, the gasification step is similar to Embodiment 1.

### Embodiment 4

Embodiment 4 is to employ the method provided by this process to gasify and extract oil shale. As shown in Fig. 4, Fig. 4 is a schematic diagram of a fracture communication process of the underground gasification method according to another embodiment of the present invention, where oil shale is extracted by pinnate horizontal drilling. The method employed by Embodiment 4 is basically the same as Embodiment 2, except for a difference that a communicating fracture is established in the oil shale between an injection borehole and a production borehole by pinnate horizontal drilling first, and then passage processing and gasification begin after ignition. The specific embodiment is as below:
A vertical borehole as a production borehole 6 is constructed from the ground 2 to an oil shale layer (i.e., a carbon-containing organic mineral reservoir) 1 via an overlying strata 3, a pinnate directional borehole as an injection borehole 5 is constructed at a distance of 300m to 500 m away from the production borehole 6, and the injection borehole 5 is brought to communicate with the production borehole 6 in the oil shale layer. The injection borehole 5 is a pinnate horizontal borehole and includes several groups of pinnate multilateral wells 18. The bottoms of both the injection borehole and the production borehole are located in the oil shale layer to be gasified.

After finishing the construction of pinnate horizontal drilling, moisture accumulated in the pinnate multilateral wells 18 is carried out by CO₂ in accordance with the method described in Embodiment 2, so that the oil shale layer at the bottom of the production borehole 6 remains dry. Then, an electrical igniter is put down to the oil shale section at the bottom of the production borehole 6. The igniter is started and CO₂ oxygen-rich is fed to ignite the oil shale at the bottom of the production borehole 6. After the oil shale is ignited, the temperature of the fire zone is controlled by adjusting the oxygen concentration and/or flow of a gasification agent according to the water inflow, temperature of the output gas and the like.

After the fire zone is debugged to become stable, by controlling the flow (about 500-1000 Nm³/h), oxygen concentration (volume concentration of 20%), pressure (about 0.7-1.0 Mpa) and other parameters at the injection borehole 5, the CO₂ oxygen-rich gas is forced to be supplied to the ignition zone 9 along the injection borehole 5 at a required flow. Then, the flow is maintained for reverse combustion, and the pressure of the injection borehole 5 is monitored in real time. When the pressure displayed on a pressure meter connected to the upper end of the injection borehole 5 drops significantly (the pressure drop reaches about 5% per day of an initial pressure), it is indicated that the originally formed ignition zone 9 is expanded nearby the bottom of the injection borehole 5. When a difference between the pressures displayed on pressure meters connected to the upper ends of the injection borehole 5 and the production borehole 6 is small (the pressure difference is less than 0.3 MPa), it is indicated that the communicating fracture between the bottom of the injection borehole 5 and the bottom of the borehole 6 has been thermally processed to form a gasification passage. After the construction of the gasification passage is completed, the gasification step is similar to Embodiment 2.

The new underground gasification method using a mixture of CO₂ and O₂ as a medium may fully adjust the reaction temperature of a carbon-containing organic mineral reservoir during underground gasification, increase and adjust the effective gas compositions and the hydrogen-carbon ratio in the coal gas, and improve the energy utilization efficiency. Meanwhile, this method may achieve CO₂ chemical utilization (for example, resource utilization) and physical storage and is thus a new low-carbon, efficient and clean underground gasification method.

Although the present invention has been described in details above, the present invention is not limited to the specific embodiments as described herein. It should be understood by those skilled in the art that other changes and deformations may be made without departing from the scope of the present invention. The scope of the present invention is defined by the appended claims.

## Claims

1. An application of a mixture of CO₂ and O₂ as a medium for fracture communication or passage processing of an underground carbon-containing organic mineral reservoir.

2. A method for fracture communication of an underground carbon-containing organic mineral reservoir, wherein the carbon-containing organic mineral reservoir is provided with at least one injection borehole and at least one production borehole, which allow the carbon-containing organic mineral reservoir to communicate with the ground, respectively, **characterized in that**, the method comprises: injecting a mixture of CO₂ and O₂ as a fracturing medium through the injection borehole to form a communicating fracture in the carbon-containing organic mineral reservoir between the injection borehole and the production borehole.

3. A method for gasification passage processing of an underground carbon-containing organic mineral reservoir, wherein the carbon-containing organic mineral reservoir is provided with at least one injection borehole and at least one production borehole, which allow the carbon-containing organic mineral reservoir to communicate with the ground, respectively, and a communicating fracture has been formed in the carbon-containing organic mineral reservoir between the injection borehole and the production borehole, **characterized in that**, the method comprises: processing the communicating fracture by using a mixture of CO₂ and O₂ as a passage processing medium, and expanding the communicating fracture by pressurization and/or combustion to form a gasification passage.

4. A method for underground gasification of an underground carbon-containing organic mineral reservoir, wherein the carbon-containing organic mineral reservoir is provided with at least one injection borehole and at least one production borehole, which allow the carbon-containing organic mineral reservoir to communicate with the ground, respectively, **characterized in that**, the method for underground gasification comprises: a fracture communication step of performing fracture communication to the carbon-containing organic mineral reservoir to form a communicating fracture; a passage processing step of performing passage processing to the communicating fracture to form a gasification passage; and a gasification step of gasifying the underground carbon-containing organic mineral reservoir to generate a raw gas, where a mixture of CO₂ and O₂ is used as a medium in at least one step in the group of the fracture communication step, the passage processing step and the gasification step.

5. The method according to any one of claims 2 to 4, **characterized in that**, the injection borehole and the production borehole are directional boreholes or vertical boreholes.

6. The method according to claim 4, **characterized in that**, after the fracture communication step, the carbon-containing organic mineral reservoir is ignited to establish a fire zone, and the passage processing step and the gasification step are then performed.

7. The method according to claim 4, **characterized in that**, before the fracture communication step, a fire zone has been established in the carbon-containing organic mineral reservoir, and the fracture communication step, the passage processing step and the gasification step are performed by using the existed fire zone of the carbon-containing organic mineral reservoir.

8. The method according to claim 4, **characterized in that**, in the fracture communication step, by injecting a mixture of CO₂ and O₂ as a fracturing medium from the injection borehole, the communicating fracture is formed in the carbon-containing organic mineral reservoir between the injection borehole and the production borehole.

9. The method according to claim 4, **characterized in that**, in the passage processing step, by using a mixture of CO₂ and O₂ as a passage processing medium, the communicating fracture is expanded by pressurization and/or combustion to form the gasification passage.

10. The method according to claim 4, **characterized in that**, in the gasification step, a combustion reaction is performed while increasing the inflow of a mixture of CO₂ and O₂ as a gasification medium in the gasification passage, so that the carbon-containing organic mineral reservoir is gasified to generate the raw gas.

11. The application or method according to any one of claims 1 to 4, **characterized in that**, the carbon-containing organic mineral reservoir is a coal seam or an oil shale layer.

12. The method according to claim 2 or 4, **characterized in that**, in the fracture communication step, the carbon-containing organic mineral reservoir between the injection borehole and the production borehole is fractured by mechanical drilling, and then the medium is injected to form the communicating fracture.

13. The method according to claim 12, **characterized in that**, the mechanical drilling is at least one drilling in the group of directionally horizontal drilling, ultrashort-radius horizontal drilling and pinnate horizontal drilling.

14. The method according to claim 2 or 4, **characterized in that**, during the fracture communication, pressure changes in the injection borehole and in the production borehole are monitored; and, when the pressure in the injection borehole drops sharply while the gas outflow of the production borehole is above 100 Nm³/h, it indicates that the communicating fracture has been formed.

15. The application or method according to any one of claims 1 to 4, **characterized in that**, the volume concentration of O₂ in the medium for the fracture communication and/or the passage processing is 20-50%.

16. The application or method according to claim 15, **characterized in that**, the volume concentration of O₂ in the medium for the fracture communication and/or the passage processing is 20-35%.

17. The method according to claim 4, **characterized in that**, the volume concentration of O₂ in the medium for the gasification step is 50-70%.

18. The underground gasification method according to claim 4, **characterized in that**, the volume concentration of O₂ in the medium for the gasification step is 50-65%.

19. The underground gasification method according to claim 4, **characterized in that**, further comprises:
a CO₂ recycling step: separating and recycling CO₂ from the raw gas generated in the gasification step, wherein at least one part of the recycled CO₂ is pressurized and then injected into the carbon-containing organic mineral reservoir for the fracture communication, the passage processing and/or the gasification.

20. The underground gasification method according to claim 19, **characterized in that**, further comprises:
a CO₂ storage step: injecting the recycled CO₂ into the combustion cavity generated after gasifying the carbon-containing organic mineral reservoir for storage.

21. The application or method according to claim 1, 2 or 4, **characterized in that**, the CO₂ in the medium is gaseous, liquid or supercritical CO₂.

22. The application or method according to claim 1, 2 or 4, **characterized in that**, the CO₂ in the medium is a mixed liquid composed of liquid CO₂, collagen liquid and chemical additives.

23. The application or method according to claim 1, 2 or 4, **characterized in that**, solid-phase particles are added into the medium to support the formed communicating fracture.

24. The application or method according to any one of claims 1 to 4, **characterized in that**, the mixture of CO₂ and O₂ is obtained by mixing CO₂ with pure oxygen on the ground or in the injection borehole.

25. The method according to any one of claims 2 to 4, **characterized in that**, a fire zone is established at the bottom of the injection borehole or the production borehole, and the mixture of CO₂ and O₂ is conveyed from the ground to the fire zone through an annular conveying pipe or the injection borehole.

26. The method according to claim 4, **characterized in that**, a high pressure pipeline for conveying the mixture of CO₂ and O₂ or for feeding high pressure CO₂ during the CO₂ storage step at the end of gasification and a low pressure pipeline for conveying the low pressure mixture of CO₂ and O₂ are mounted at the inlet of the injection borehole, and a high pressure coal gas pipeline for conveying a gas mixture generated during the fracture communication and a low pressure coal gas pipeline for conveying the low pressure raw gas generated by the gasification are mounted at the outlet of the production borehole.

27. The method according to claim 4, **characterized in that**, CO₂ in the generated raw gas is separated and captured, and the captured CO₂ is used for the fracture communication, the passage processing or the underground gasification.

28. The method according to claim 3 or 4, **characterized in that**, the medium further comprises water vapor.
